# EUROPÄISCHE PATENTSCHRIFT

(11) **EP 2 222 961 B1**
(45) Veröffentlichungstag und Bekanntmachung des Hinweises auf die Patenterteilung: **23.03.2011**
(21) Anmeldenummer: 08852141.4
(22) Anmeldetag: 01.10.2008
(51) Int. Cl.: F04D 29/02, F04D 29/42, F04D 29/44, B29C 65/54

(54) **GEHÄUSE FÜR EINEN RADIALVERDICHTER**
HOUSING FOR A CENTRIFUGAL COMPRESSOR
CARTER POUR UN COMPRESSEUR CENTRIFUGE RADIAL

(30) Priorität: 20.11.2007 DE 102007055615
(43) Veröffentlichungstag der Anmeldung: 01.09.2010
(73) Patentinhaber: Mann + Hummel GmbH, 71638 Ludwigsburg (DE); Bayerische Motoren Werke Aktiengesellschaft, 80809 München (DE)
(72) Erfinder: VELTHUIS, Jan, 86899 Pitzling (DE); SCHICK, Hedwig, 71732 Tamm (DE); WILD, Stephan, 75305 Neuenbürg (DE)
(74) Vertreter: Müller, Gottfried
(86) Internationale Anmeldenummer: PCT/EP2008/063146
(87) Internationale Veröffentlichungsnummer: WO 2009/065660

(56) Entgegenhaltungen:
- EP-A- 1 830 071
- WO-A-2004/005674
- DE-A1- 10 260 042
- FR-A- 2 853 021
- FR-A- 2 897 907
- JP-A- 58 200 003

## Beschreibung

### Technisches Gebiet

Die Erfindung bezieht sich auf ein Gehäuse für einen Radialverdichter nach dem Oberbegriff des Anspruches 1.

### Stand der Technik

In der DE 103 14 209 B3, die als nächstliegender Stand der Technik angesehen wird, wird ein Radialverdichter als Teil eines Abgasturboladers beschrieben, der aus zwei schalenförmigen Gehäuseteilen zusammengesetzt ist, welche aus einem Duroplast-Werkstoff gespritzt sind. Dieser Werkstoff weist eine hohe Dichte auf, so dass im Vergleich zu sonst üblichen Ladergehäusen aus Metall kein Gewichtsvorteil besteht. Dem großen Gewicht wird in der DE 103 14 209 B3 versucht entgegenzuwirken, indem in eines der Gehäuseteile kammerförmige Aussparungen eingebracht sind, die durch Trennwände voneinander separiert sind und sich im wesentlichen konzentrisch um eine Lufteintrittsachse erstrecken.

Die Gehäuseteile werden zusammengeklebt, was jedoch einen verhältnismäßig hohen Fertigungsaufwand bedingt. Duroplast als Werkstoff zeichnet sich außerdem durch eine verhältnismäßig hohe Sprödigkeit und eine hohe Wasseraufnahme sowie durch verhältnismäßig geringe Maßhaltigkeit bei hohen Temperaturen aus. Darüber hinaus besteht eine große akustische Abstrahlung und sind die Herstellkosten verhältnismäßig teuer.

Bei Radialverdichtern ist darüber hinaus eine ausreichende Betriebssicherheit zu berücksichtigen. Aufgrund der hohen Raddrehzahlen von Turboladern besteht die Gefahr, dass bei einer Beschädigung des Verdichterrades Metallsplitter das Gehäuse des Verdichters durchdringen und Bauteile im Motorraum der Brennkraftmaschine beschädigen.

### Offenbarung der Erfindung

Der Erfindung liegt die Aufgabe zugrunde, ein leicht bauendes, maßgenaues Gehäuse für einen Radialverdichter mit ausreichender Dichtigkeit und hoher Wärmebeständigkeit aus Kunststoff herzustellen, wobei im Falle der Beschädigung des Verdichterrades die Gefahr von umher fliegenden Metallsplittern reduziert sein soll.

Diese Aufgabe wird erfindungsgemäß mit den Merkmalen des Anspruches 1 gelöst. Die Unteransprüche geben zweckmäßige Weiterbildungen an.

Das erfindungsgemäße Gehäuse für einen Radialverdichter besteht aus mindestens zwei aus Kunststoff gefertigten Gehäuseteilen, die einerseits zur Aufnahme eines Verdichterrades ausgebildet sind und zwischen denen andererseits ein spiralförmiger Verdichterkanal gebildet ist. In das Gehäuse ist zwischen einem Verdichteraufnahmeraum, welcher zur Aufnahme und Lagerung des Verdichterrades dient, und dem spiralförmigen Verdichterkanal ein umlaufender Ringraum gebildet, der das Verdichterrad ringförmig umschließt. In diesen Ringraum ist mindestens ein Stabilisierungselement eingebracht.

Die aus Kunststoff gefertigten Gehäuseteile, die insbesondere aus einem thermoplastischen Kunststoff bestehen und im Spritzgussverfahren hergestellt werden, beispielsweise aus Polyphenylensulfid (PPS), erfüllen gemeinsam mit dem Ringraum, in den mindestens ein Stabilisierungselement eingebracht ist, auch hohe Sicherheitsanforderungen insbesondere auch für den Fall eines Bruchs des Verdichterrades. Der Ringraum befindet sich auf der radialen Außenseite des Verdichterrades, so dass absplitternde Radteile, die aufgrund der hohen Umdrehungsgeschwindigkeit des Verdichterrades tangential nach außen geschleudert werden, auf den Ringraum und das darin angeordnete Stabilisierungselement treffen. Die Wandungen des Ringraumes sorgen bereits für eine wirkungsvolle Reduzierung der tangential absplitternden Radteile, hinzu kommt noch das im Ringraum aufgenommene Stabilisierungselement, welches zum einen einer Verformung der Wandungen des Ringraumes entgegenwirkt und insgesamt die Stabilität des Gehäuses verbessert und zum andern bei einem Aufprall eines abgesplitterten Radteils für eine wirkungsvolle Dämpfung sorgt. Dem Stabilisierungselement kommt somit eine doppelte Funktion zu: es wird zum einen der Ringraum und damit das gesamte Gehäuse unterstützt bzw. gestärkt, zum andern wird bei einem Unfall der Schutz vor weggeschleuderten Radteilchen verbessert.

In Achsrichtung erstreckt sich der Ringraum vorteilhafterweise zumindest über die Achslänge des Verdichterrades, wobei ggf. auch eine Erstreckung im Wesentlichen über die Länge eines der Gehäuseteile in Betracht kommt, welches den Ringraum begrenzt.

Als Stabilisierungselement kommt ein separates Bauteil in Betracht, welches in den Ringraum eingesetzt wird. Beispielsweise ist das Stabilisierungselement als Füllschlauch ausgeführt, beispielhaft bestehend aus einer Aramidfaser oder ähnlichem, der bei der Montage des Gehäuses in den Ringraum eingesetzt wird. Um das Zusammensetzen des Gehäuses zu erleichtern, kann hierfür in eines der den Ringraum begrenzenden Bauteile eine Ringnut eingebracht sein, die Teil des Ringraumes ist und bereits vor dem Zusammensetzen der beiden Gehäuseteile eine Aufnahme für das Stabilisierungselement bildet.

In Radialrichtung weist der Ringraum eine Erstreckung auf, die das Einsetzen des Stabilisierungselementes erlaubt. Bezogen auf die Wandstärke der begrenzenden Wandung liegt die radiale Erstreckung bevorzugt bei einem Mehrfachen der Wandstärke, beispielsweise beim Drei- bis Fünffachen der Wandstärke. Des Weiteren kann es zweckmäßig sein, die radiale Erstreckung des Ringraumes über den Umfang gesehen an die Form des spiralförmigen Verdichterkanals anzupassen. Da der Verdichterkanal in Umfangsrichtung einen veränderlichen Durchmesser aufweist, steht in Abschnitten kleineren Durchmessers des Verdichterkanals eine größere radiale Erstreckung für den Ringraum zur Verfügung als in Abschnitten mit größerem Durchmesser.

Die Herstellung des Verdichtergehäuses aus dem thermoplastischen Kunststoff, insbesondere aus PPS, weist den Vorteil der leichten Herstellbarkeit sowie der guten Recycelbarkeit auf. Bei der Herstellung im Spritzgussverfahren kann auf eine Kernschmelztechnik verzichtet werden, es erfolgt lediglich eine Herstellung im Spritzgussverfahren mittels einfach aufgebauter, auf- und zuklappbarer Werkzeuge. Ein weiterer Vorteil liegt in der Herstellung komplexer Geometrien des Gehäuses, beispielsweise einem Spiralkanal mit mehreren Hinterschnitten. Schließlich lassen sich thermoplastische Kunststoffe mit hoher Maßgenauigkeit herstellen, so dass auf eine Nacharbeit verzichtet werden kann bzw. sich diese in Grenzen hält. Außerdem ist der thermoplastische Kunststoff hitzebeständig, druckdicht und weist bei einem geringen Gewicht gute Schall isolierende Eigenschaften auf.

Ein weiterer Vorteil liegt in der Möglichkeit, Gehäuseteile mit konstanten Wandstärken auszubilden, so dass Materialanhäufungen vermieden werden und das Risiko von Lunkerbildung reduziert ist.

Die Gehäuseteile können zusammengeschweißt werden, insbesondere im Wege des Ultraschallschweißens. Um die für den Schweißvorgang erforderliche Ultraschallsonde (Sonotrode) in einfacher Weise an der vorgesehenen Schweißnaht positionieren zu können, befindet sich vorteilhafterweise der Kontaktbereich zwischen den zu verschweißenden Gehäuseteilen benachbart zu einer axialen Stirnseite des Gehäuses, insbesondere benachbart zur Anströmseite. Außerdem liegen die Kontaktbereiche zwischen den Gehäuseteilen vorzugsweise mit Abstand zum spiralförmigen Verdichterkanal, sie sind damit aus dem kritischen Spiralbereich herausgenommen, so dass die Luftführung an der Innenseite der Spirale nicht durch einen unerwünschten, durch das Schweißen erzeugten Austrieb in der Wandung beeinträchtigt wird.

Gemäß einer weiteren vorteilhaften Ausführung besteht das Gehäuse insgesamt aus drei Gehäuseteilen, bei denen es sich um ein Verdichterfrontteil, eine Verdichterrückwand und eine innenliegende Laufschale handelt. Verdichterfrontteil und Verdichterrückwand bilden die äußeren Gehäuseteile, zwischen denen die Laufschale positioniert ist, welche zur Aufnahme des Verdichterrades dient. Der Ringraum ist vorzugsweise zwischen der Laufschale und dem Verdichterfrontteil gebildet.

### Kurze Beschreibung der Zeichnungen

Weitere Vorteile und zweckmäßige Ausführungen sind den weiteren Ansprüchen, der Figurenbeschreibung und der Zeichnung zu entnehmen. Die einzige Figur zeigt einen Schnitt durch ein Gehäuse für einen Radialverdichter, bestehend aus drei einzelnen Gehäuseteilen aus thermoplastischem Kunststoff, die durch Ultraschallschweißen zusammengeschweißt sind, wobei zwischen einer innenliegenden Laufschale und einem Verdichterfrontteil ein den Verdichterradaufnahmeraum umgreifender Ringraum gebildet ist.

### Ausführungsformen der Erfindung

Das dargestellte Gehäuse 1 für einen Radialverdichter ist Bestandteil eines Abgasturboladers einer Brennkraftmaschine, bei der die Abgase einer Brennkraftmaschine ein Turbinenrad antreiben, welches drehfest mit einem Verdichterrad verbunden ist, das im Gehäuse 1 drehbar gelagert ist. Durch die Rotation des Verdichterrades wird Verbrennungsluft im Ansaugtrakt angesaugt und auf einen erhöhten Ladedruck verdichtet, unter dem die Verbrennungsluft den Zylindern der Brennkraftmaschine zugeführt wird.

Das Gehäuse 1 ist dreiteilig aufgebaut und umfasst eine Verdichterrückwand 2, ein Verdichterfrontteil 3 und eine innenliegende Laufschale 4, die einen Verdichterradaufnahmeraum 5 zur Aufnahme und Lagerung des Verdichterrades begrenzt, das im Ausführungsbeispiel mit Bezugszeichen 7 versehen und nur andeutungsweise mit gepunkteter Linie dargestellt ist. Die Verbrennungsluft wird dem Verdichterrad 7 über einen Ansaugstutzen 6 axial zugeführt, der im Verdichterfrontteil 3 gebildet ist. Die komprimierte Verbrennungsluft wird radial über einen Diffusor 9 in einen spiralförmigen Verdichterkanal 8 geleitet, der von Verdichterfrontteil 3 und Verdichterrückwand 2 begrenzt ist und in einen Auslassstutzen mündet, über den die komprimierte Verbrennungsluft schließlich den Zylindern der Brennkraftmaschine zugeführt wird.

Zwischen dem Verdichterfrontteil 3 und der Laufschale 4 ist ein umlaufender Ringraum 10 gebildet, der den Verdichterradaufnahmeraum 5 radial umschließt und von dem Verdichterradaufnahmeraum 5 über die Wandung der Laufschale 4 strömungsdicht separiert ist. Der Ringraum 10 weist im Wesentlichen die gleiche axiale Erstreckung auf wie die Laufschale 4 und damit auch der Verdichterradaufnahmeraum 5. In den Ringraum 10 ist ein als separates Bauteil ausgebildeter Füllschlauch 11 eingebracht, der die Funktion eines Stabilisierungselementes übernimmt und zusätzlich zur Stärkung des Gehäuses 1 auch eine Sicherheitsfunktion bei einem Unfall übernimmt, indem absplitternde Radteile des Verdichterrades 7, die tangential nach außen geschleudert werden, von dem Stabilisierungselement 11 aufgefangen werden.

Die Gehäuseteile 2, 3, 4 bestehen aus thermoplastischem Kunststoff und werden im Wege des Ultraschallschweißens zusammengefügt. Dies erfolgt in der Weise, dass eine Sonotrode an die Kontaktbereiche 14 zwischen Verdichterrückwand 2 und Verdichterfrontteil 3 bzw. 15 zwischen Laufschale 4 und Verdichterfrontteil 3 gesetzt wird, um den Prozess des Ultraschallschweißens durchzuführen. Der erste Kontaktbereich 14 zwischen Verdichterrückwand 2 und Verdichterfrontteil 3 befindet sich im radial außen liegenden Bereich, benachbart zur Stirnseite, die die Anströmseite des Gehäuses bildet. Der Kontaktbereich 15 liegt demgegenüber radial nach innen versetzt zwischen der Laufschale 4 und dem Verdichterfrontteil 3 unmittelbar benachbart zum Verdichterradaufnahmeraum 5, jedoch ebenfalls auf der der Anströmseite zugewandten Seite des Gehäuses.

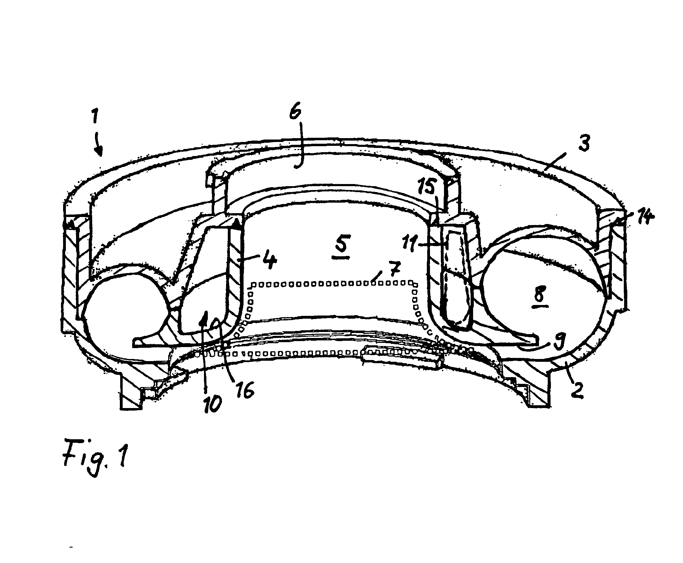

Die Laufschale 4 ist in der Weise geformt, dass im Bereich des Ringraumes 10 in der Laufschale 4 eine Ringnut 16 gebildet ist, die von dem aufzusetzenden Verdichterfrontteil 3 zu dem Ringraum 10 ergänzt wird. Die Ringnut 16 hat den Vorteil, dass bereits vor dem Aufsetzen des Verdichterfrontteiles 3 ein Aufnahmeraum zum Einsetzen eines Stabilisierungselementes gegeben ist, was insbesondere bei der als separates Bauteil ausgeführten Variante gemäß Fig. 1 Vorteile bietet, da in diesem Fall das als eigenständiges Bauteil ausgebildete Stabilisierungselement noch vor dem Aufsetzen des Verdichterfrontteils sicher in der Ringnut 16 aufgenommen ist.

## Patentansprüche

1. Gehäuse für einen Radialverdichter, bestehend aus mindestens zwei aus Kunststoff gefertigten Gehäuseteilen (2, 3, 4) zur Aufnahme eines Verdichterrads (7) und zur Bildung eines spiralförmigen Verdichterkanals (8), wobei in das Gehäuse (1) zwischen einem Verdichterradaufnahmeraum (5) und dem spiralförmigen Verdichterkanal (8) ein Hohlraum eingebracht ist, der als Ringraum (10) ausgebildet ist und das Verdichterrad (7) ringförmig umschließt, **dadurch gekennzeichnet, dass** das Gehäuse dreiteilig aufgebaut ist und ein Verdichterfrontteil (3), eine Verdichterrückwand (2) und eine innenliegende Laufschale (4) zur Aufnahme des Verdichterrades umfasst, dass das Verdichterfrontteil (3) und die Verdichterrückwand (2) die äußeren Gehäuseteile bilden, zwischen denen die Laufschale (4) positioniert ist, dass der Ringraum (10) zwischen der Laufschale (4) und dem Verdichterfrontteil (3) gebildet ist, wobei der Ringraum (10) einen Verdichterradaufnahmeraum (5) radial umschließt und von dem Verdichterradaufnahmeraum (5) über eine Wandung der Laufschale (4) strömungsdicht separiert ist, und dass in den Ringraum (10) mindestens ein Stabilisierungselement eingebracht ist.

2. Gehäuse nach Anspruch 1, **dadurch gekennzeichnet, dass** die Laufschale (4) auf der dem Verdichterradaufnahmeraum (5) abgewandten Seite eine Ringnut (16) aufweist, die einen Teil des Ringraumes (10) bildet.

3. Gehäuse nach Anspruch 1 oder 2, **dadurch gekennzeichnet, dass** das Verdichterfrontteil (3) einen Kontaktbereich (15) mit der Laufschale (4) und einen weiteren Kontaktbereich (14) mit der Verdichterrückwand (2) aufweist.

4. Gehäuse nach einem der Ansprüche 1 bis 3, **dadurch gekennzeichnet, dass** die Kontaktbereiche (14, 15) zwischen den Gehäuseteilen (2, 3, 4) mit Abstand zum spiralförmigen Verdichterkanal (8) angeordnet sind.

5. Gehäuse nach einem der Ansprüche 1 bis 4, **dadurch gekennzeichnet, dass** die Kontaktbereiche (14, 15) benachbart zur Ansaugöffnung (6) des Gehäuses (1) liegen.

6. Gehäuse nach einem der Ansprüche 1 bis 5, **dadurch gekennzeichnet, dass** die Gehäuseteile (2, 3, 4) miteinander verschweißt sind, insbesondere durch Ultraschallschweißen.

7. Gehäuse nach einem der Ansprüche 1 bis 6, **dadurch gekennzeichnet, dass** das Stabilisierungselement im Ringraum (10) als Füllstoff ausgeführt ist.

8. Gehäuse nach Anspruch 7, **dadurch gekennzeichnet, dass** der Füllstoff aus Kunststoff besteht.

9. Gehäuse nach einem der Ansprüche 1 bis 8, **dadurch gekennzeichnet, dass** das Stabilisierungselement im Ringraum (10) als eigenständiges Bauteil ausgeführt ist, beispielsweise als Füllschlauch (11).

10. Gehäuse nach einem der Ansprüche 1 bis 9, **dadurch gekennzeichnet, dass** die Gehäuseteile (2, 3, 4) aus thermoplastischem Kunststoff gefertigt und insbesondere im Spritzgussverfahren herstellbar sind.

11. Gehäuse nach Anspruch 10, **dadurch gekennzeichnet, dass** die Gehäuseteile aus Polyphenylensulfid (PPS) bestehen.

## Claims

1. Housing for a radial compressor, consisting of at least two housing parts (2, 3, 4) manufactured from plastic for receiving a compressor wheel (7) and for forming a spiral compressor duct (8), the housing (1) having introduced into it between a compressor-wheel reception space (5) and the spiral compressor duct (8) a cavity which is designed as an annular space (10) and annularly surrounds the compressor wheel (7), **characterized in that** the housing is of three-part construction and comprises a compressor front part (3), a compressor rear wall (2) and an internal shroud (4) for receiving the compressor wheel, **in that** the compressor front part (3) and the compressor rear wall (2) form the outer housing parts, between which the shroud (4) is positioned, **in that** the annular space (10) is formed between the shroud (4) and the compressor front part (3), the annular space (10) radially surrounding a compressor-wheel reception space (5) and being separated in a flow-tight manner from the compressor-wheel reception space (5) via a wall of the shroud (4), and **in that** at least one stabilizing element is introduced into the annular space (10).

2. Housing according to Claim 1, **characterized in that** the shroud (4) has, on the side facing away from the compressor-wheel reception space (5), an annular groove (16) which forms part of the annular space (10).

3. Housing according to Claim 1 or 2, **characterized in that** the compressor front part (3) has a contact region (15) with the shroud (4) and a further contact region (14) with the compressor rear wall (2).

4. Housing according to one of Claims 1 to 3, **characterized in that** the contact regions (14, 15) are arranged between the housing parts (2, 3, 4) at a distance from the spiral compressor duct (8).

5. Housing according to one of Claims 1 to 4, **characterized in that** the contact regions (14, 15) lie adjacently to the intake port (6) of the housing (1).

6. Housing according to one of Claims 1 to 5, **characterized in that** the housing parts (2, 3, 4) are welded to one another, in particular by ultrasonic welding.

7. Housing according to one of Claims 1 to 6, **characterized in that** the stabilizing element in the annular space (10) is in the form of a filler.

8. Housing according to Claim 7, **characterized in that** the filler consists of plastic.

9. Housing according to one of Claims 1 to 8, **characterized in that** the stabilizing element in the annular space (10) is designed as an independent component, for example as a filling hose (11).

10. Housing according to one of Claims 1 to 9, **characterized in that** the housing parts (2, 3, 4) are manufactured from thermal plastic and, in particular, can be produced by the injection-moulding method.

11. Housing according to Claim 10, **characterized in that** the housing parts consist of polyphenylene sulphide (PPS).

## Revendications

1. Carter de compresseur radial, constitué d'au moins deux parties de carter (2, 3, 4) réalisées en matière synthétique, reprenant une roue de compresseur (7) et formant un canal de compresseur (8) en forme de spirale,
une cavité configurée comme espace annulaire (10) et entourant en anneau la roue de compresseur (7) étant ménagée dans le carter (1) entre un espace (5) de reprise de la roue de compresseur et le canal de compresseur (8) en forme de spirale,
**caractérisé en ce que**
le carter est réalisé en trois pièces et comporte une partie avant (3) de compresseur, une partie arrière (2) de compresseur et une coquille intérieure de déplacement (4) qui reprend une roue de compresseur,
**en ce que** la partie avant (3) du compresseur et la partie arrière (2) du compresseur forment des parties extérieures du carter entre lesquelles la coquille de déplacement (4) est placée,
**en ce que** l'espace annulaire (10) est formé entre la coquille de déplacement (4) et la partie avant (3) du compresseur, l'espace annulaire (10) entourant radialement un espace (5) de reprise de la roue de compresseur et étant séparé de manière étanche vis-à-vis de l'écoulement de l'espace (5) de reprise de la roue de compresseur par une paroi de la coquille de déplacement (4), et
**en ce qu'**au moins un élément de stabilisation est placé dans l'espace annulaire (10).

2. Carter selon la revendication 1, **caractérisé en ce que** sur son côté non tourné vers l'espace (5) de reprise de la roue de compresseur, la coquille de déplacement (4) présente une rainure annulaire (16) qui forme une partie de l'espace annulaire (10).

3. Carter selon les revendications 1 ou 2, **caractérisé en ce que** la partie avant (3) du compresseur présente une zone de contact (15) avec la coquille de déplacement (4) et une autre zone de contact (14) avec la paroi arrière (2) du compresseur.

4. Carter selon l'une des revendications 1 à 3, **caractérisé en ce que** les zones de contact (14, 15) sont disposées entre les parties de carter (2, 3, 4) à distance du canal de compresseur (8) en forme de spirale.

5. Carter selon l'une des revendications 1 à 4, **caractérisé en ce que** les zones de contact (14, 15) sont voisines de l'ouverture d'aspiration (6) du carter (1).

6. Carter selon l'une des revendications 1 à 5, **caractérisé en ce que** les parties de carter (2, 3, 4) sont soudées les unes aux autres, en particulier par soudage aux ultrasons.

7. Carter selon l'une des revendications 1 à 6, **caractérisé en ce que** l'élément de stabilisation prévu dans l'espace annulaire (10) est réalisé sous la forme d'une charge de remplissage.

8. Carter selon la revendication 7, **caractérisé en ce que** la charge de remplissage est constituée de matière synthétique.

9. Carter selon l'une des revendications 1 à 8, **caractérisé en ce que** l'élément de stabilisation prévu dans l'espace annulaire (10) est réalisé sous la forme d'un composant autonome, par exemple un tuyau flexible de remplissage (11).

10. Carter selon l'une des revendications 1 à 9, **caractérisé en ce que** les parties carter (2, 3, 4) du sont réalisées en matière synthétique thermoplastique et peuvent être fabriquées en particulier par une opération de moulage par injection.

11. Carter selon la revendication 10, **caractérisé en ce que** les parties du carter sont constituées de poly(sulfure de phénylène) (PPS).
